# EUROPEAN PATENT SPECIFICATION

(11) **EP 3 379 827 B1**
(45) Date of publication and mention of the grant of the patent: **29.01.2020**
(21) Application number: 16866059.5
(22) Date of filing: 11.10.2016
(51) Int. Cl.: H04N 7/18, B60R 1/00, B60R 21/00, G06T 1/00

(54) **DISPLAY DEVICE FOR VEHICLES AND DISPLAY METHOD FOR VEHICLES**
ANZEIGEVORRICHTUNG FÜR FAHRZEUGE UND ANZEIGEVERFAHREN FÜR FAHRZEUGE
DISPOSITIF D'AFFICHAGE POUR DES VÉHICULES ET PROCÉDÉ D'AFFICHAGE POUR DES VÉHICULES

(30) Priority: 17.11.2015 JP 2015224379; 26.07.2016 JP 2016146181
(43) Date of publication of application: 26.09.2018
(73) Proprietor: JVC Kenwood Corporation, Yokohama-shi, Kanagawa 221-0022 (JP)
(72) Inventor: KATSUMATA, Noboru, Yokohama-shi Kanagawa 221-0022 (JP)
(74) Representative: Klang, Alexander H.
(86) International application number: PCT/JP2016/080091
(87) International publication number: WO 2017/086057

(56) References cited:
- WO-A1-00/64175
- JP-A- 2003 212 041
- JP-A- 2012 064 096
- JP-A- 2012 185 540
- US-A1- 2010 220 190
- US-A1- 2014 218 531
- US-A1- 2015 222 858

## Description

### [TECHNICAL FIELD]

The present invention relates to a display technology for vehicles and, in particular, to a vehicle display device and a vehicle display method for displaying images.

### [BACKGROUND ART]

Technologies of providing cameras at a plurality of locations in a vehicle, subjecting captured images to viewpoint transform and synthesizing the resultant images, and obtaining a bird's-eye image have been used extensively. A view of this this type is presented when, for example, a vehicle is put in a garage and is used to check the neighborhood of the vehicle or know the position. For example, when there is an obstacle in the neighborhood of the vehicle being put in a garage, the obstacle is shown in the bird's-eye image. Since the bird's-eye image is subjected to viewpoint transform, however, it is difficult to know a distance to the obstacle. For this reason, when an obstacle is detected, an original image showing an area where the obstacle is detected is displayed (see, for example, JP 2007-235529 A).

US 20102 20190 A discloses an apparatus and method for displaying a bird's eye view image of around a vehicle in a relatively simple manner without causing a large amount of processing load, in which a driver can easily perceive a three-dimensional obstacle placed adjacent to a seam.

US 2014 218531 A discloses a driving assistance apparatus in which the detection range of a left-front-corner sonar located at the vehicle's left front corner is included in the field of view of a second imaging means located at the vehicle's left-front corner. When the left-front-corner sonar detects a three-dimensional object at the vehicle's left front corner, an image processing means synthesizes an image of the image created using a second imaging means and the images created with four cameras for imaging the complete periphery of the vehicle, and creates a bird's-eye-view image. The detection range of the left-front-corner sonar is included within a region of the bird's-eye image on the basis of the image created with the second imaging means.

### [SUMMARY OF THE INVENTION]

The imaging range of the original image displayed when an obstacle is detected is identical to the imaging range of the bird's-eye image. For this reason, the obstacle located in a range not shown in the bird's-eye image is not shown in the original image, either. Meanwhile, when a bird's-eye image covering an extensive range that may include an obstacle at a long distance is displayed, the driver would not be able to know the situation in the neighborhood of the vehicle.

In this background, a general purpose of the present invention is to provide a technology that allows a driver to easily know the situation in the neighborhood of the vehicle and, in particular, the presence of an object that could be an obstacle.

In accordance with the present invention, a vehicle display device and a vehicle display method as set forth in the appended claims is provided. In particular, to address the aforementioned issue, a vehicle display device according to an embodiment comprises; a first acquisition unit that acquires a first type image that shows a neighborhood of a vehicle; a first image production unit that subjects the first type image acquired in the first acquisition unit to viewpoint transform so as to produce a first type bird's-eye image as viewed from above the vehicle; a display controller that displays the first type bird's-eye image produced in the first image production unit; a second acquisition unit that acquires a second type image that shows a range more distanced from the vehicle than the first type image from a position higher than that of the first type image acquired, in the first acquisition unit; a second image production unit that subjects the second type image acquired in the second acquisition unit to viewpoint transform so as to produce a second type bird's-eye image as viewed from above the vehicle; and an object detector that detects an object around the vehicle. The display controller displays the second type bird's-eye image produced in the second image production unit and corresponding to a direction of the object detected, in addition to the first type bird's-eye image when the object detector has detected the object.

Another embodiment relates to a vehicle display method. The method comprises; acquiring a first type image, that shows a neighborhood of a vehicle; subjecting the first type image acquired to viewpoint transform so as to produce a first type bird's-eye image as viewed from above the vehicle; displaying the first type bird's-eye image produced; acquiring a second type image that shows a range more distanced from the vehicle than the first type image from a position higher than that of the first type image; subjecting the second type image acquired to viewpoint transform so as to produce a second type bird's-eye image as viewed from above the vehicle; detecting an object around the vehicle; and displaying the second type bird's-eye image produced and corresponding to a direction of the object detected, in addition to the first type bird's-eye image when the object is detected.

Optional combinations of the aforementioned constituting elements, and implementations of the embodiments in the form of methods, apparatuses, systems, recording mediums, and computer programs may also be practiced as additional modes of the embodiments.

The embodiment allows a driver to easily know the situation in the neighborhood of the vehicle and, in particular, the presence of an object that could be an obstacle.

### [BRIEF DESCRIPTION OF THE DRAWINGS]

Figs. 1A-1B show an appearance of a vehicle according to Embodiment 1 of the present invention;
Fig. 2 shows a configuration of a vehicle display device according to Embodiment 1 of the present invention;
Fig. 3 is a perspective view showing imaging ranges formed around the vehicle of Figs. 1A-1B;
Fig. 4 shows a first type bird's-eye image produced in the first image production unit of Fig. 2;
Fig. 5 is a perspective view showing the other imaging ranges formed around the vehicle of Figs. 1A-1B;
Fig. 6 shows a bird's-eye image produced in the display controller of Fig. 2;
Fig. 7 shows another bird's-eye image produced in the display controller of Fig. 2;
Fig. 8 is a flowchart showing steps for display performed by the vehicle display device of Fig. 2;
Fig. 9 is a flowchart showing steps for display performed by the vehicle display device according to Embodiment 2 of the present invention;
Fig. 10 shows a configuration of a vehicle display device according to Embodiment 3 of the present invention; and
Fig. 11 shows a bird's-eye image produced in the display controller of Fig. 10.

### [MODE FOR CARRYING OUT THE INVENTION]

### (Embodiment 1)

A summary will be given before describing the invention in specific details. Embodiment 1 of the present invention relates to a vehicle display device that produces a bird's-eye image by subjecting images captured by a plurality of imaging units provided in a vehicle to viewpoint transform and displays the bird's-eye image thus produced. The bird's-eye image shows an object located in the neighborhood of the vehicle but does not show an object located at a distance from the vehicle such as an obstacle located at a distance of 1 m or longer from the vehicle. The vehicle display device according to the embodiment performs the following steps to display an object located at a distance from the vehicle. The vehicle is provided with a plurality of first imaging units toward the lower part of the vehicle. The vehicle display device produces a first type bird's-eye image from first type images captured by the plurality of first imaging units. The vehicle is also provided with a plurality of second imaging units at positions higher than those of the first imaging units. The vehicle display device produces a second type bird's-eye image from second type images captured by the plurality of second imaging units.

The vehicle is also provided with a sensor. The vehicle display device detects the presence of an object by referring to a result of detection by the sensor. The vehicle display device displays a first type bird's-eye image when the presence of an object is not detected but displays a second type bird's-eye image in addition to the first type bird's-eye image when the presence of an object is detected. The height at which the second imaging units are provided is higher than the height at which the first imaging units are provided. The second imaging units are provided at position where the second imaging units are capable of capturing images from a longer distance than the first imaging units. Therefore, the second type bird's-eye image can show objects at a longer distance than the first type bird's-eye image. Meanwhile, the second type bird's-eye image need not be displayed when there are no objects. Thus, the view is switched depending on whether an object is present or not.

A description will be given of embodiments of the present invention with reference to the drawings. Specific numerical values are shown in the embodiments by way of example only to facilitate the understanding of the invention and should not be construed as limiting the scope of the invention unless specifically indicated as such. Those elements in the specification and drawings that have substantially identical functions and structures are represented by the same reference symbols so that the description is not duplicated. Elements not relevant to the invention directly are omitted from the illustration.

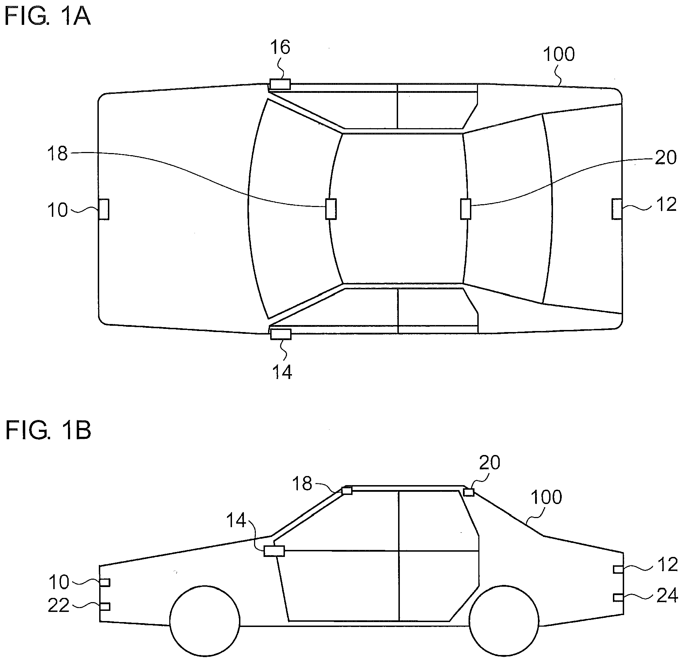

Figs. 1A-1B show an appearance of a vehicle 100 according to Embodiment 1 of the present invention. Fig. 1A is a top view of the vehicle 100 and Fig. 1B is a side view. A first front imaging unit 10 is provided in the frontal portion (e.g., a bumper, bonnet(hood), etc.) of the vehicle 100. A first rear imaging unit 12 is provided in the rear portion (e.g., a bumper, trunk(boot), etc.) of the vehicle 100. A first left imaging unit 14 is provided in the left portion (e.g., below a left door mirror, etc.) of the vehicle. A first right imaging unit 16 is provided in the right portion of the vehicle so as to be symmetrical with the first left imaging unit 14. The first front imaging unit 10 through the first right imaging unit 16 are generically referred to as first imaging units.

A second front imaging unit 18 is provided inside the vehicle toward the front end of the roof of the vehicle 100. A second rear imaging unit 20 is provided inside the vehicle toward the rear end of the roof of the vehicle 100. The second front imaging unit 18 and the second rear imaging unit 20 are positioned higher than the first imaging units and oriented so that they can capture images from a longer distance than the first imaging units. Therefore, the second front imaging unit 18 and the second rear imaging unit 20 are capable of capturing an image of an object at a longer distance than the first imaging units. The second front imaging unit 18 and the second rear imaging unit 20 are provided inside the vehicle near the roof of the vehicle 100. Alternatively, the second front imaging unit 18 and the second rear imaging unit 20 may be provided in the front and rear bumpers of the vehicle 100 or front and rear body portions of the vehicle 100 so long as they are provided at positions higher than the first front imaging unit 10 and the first rear imaging unit 12. The second front imaging unit 18 and the second rear imaging unit 20 are generically referred to as second imaging units. Referring to Figs. 1A-1B, the second imaging units are only provided toward the front and rear ends of the vehicle 100. Alternatively, the second imaging units may be provided toward the front, rear, left, and right ends of the vehicle.

A front sensor 22 is provided in the frontal portion of the vehicle 100, like the first front imaging unit 10. A rear sensor 24 is provided in the rear portion of the vehicle 100, like the first rear imaging unit 12. For example, the front sensor 22 is provided in the neighborhood of the first front imaging unit 10, and the rear sensor 24 may be provided in the neighborhood of the first rear imaging unit 12.

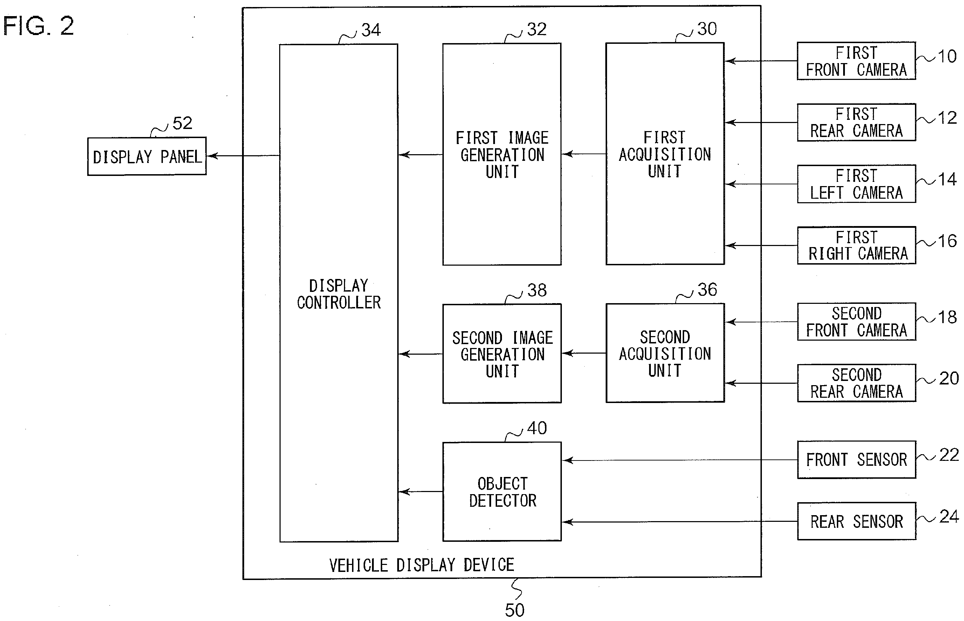

Fig. 2 shows a configuration of a vehicle display device 50 according to Embodiment 1 of the present invention. The first front imaging unit (first front camera) 10, the first rear imaging unit (first rear camera) 12, the first left imaging unit (first left camera) 14, the first right imaging unit (first right camera) 16, the second front imaging unit (second front camera) 18, the second rear imaging unit (second rear camera) 20, the front sensor 22, the rear sensor 24, and a display panel 52 are connected to the vehicle display device 50. The vehicle display device 50 includes a first acquisition unit 30, a first image production unit 32, a display controller 34, a second acquisition unit 36, a second image production unit 38, and an object detector 40.

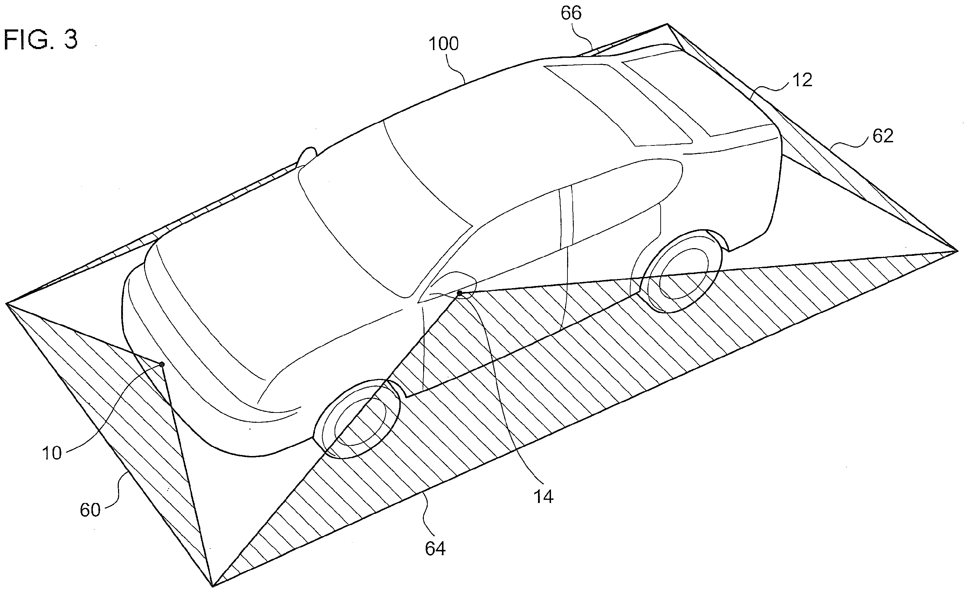

The first front imaging unit 10, the first rear imaging unit 12, the first left imaging unit 14, and the first right imaging unit 16 are arranged as shown in Fig. 1. Fig. 3 is a perspective view showing imaging ranges formed around the vehicle 100. The first front imaging unit 10 forms a front imaging area 60 extending forward from the first front imaging unit 10 and captures an image in the front imaging area 60. The first rear imaging unit 12 forms a rear imaging area 62 extending rearward from the first rear imaging unit 12 and captures an image in the rear imaging area 62. The first left imaging unit 14 forms a left imaging area 64 extending leftward from the first left imaging unit 14 and captures an image in the left imaging area 64. The first right imaging unit 16 forms a right imaging area 66 extending rightward from the first right imaging unit 16 and captures an image in the right imaging area 66.

The front imaging area 60 indicated by diagonal lines in Fig. 3 shows that, of the range that can be imaged by the first front imaging unit 10, the range bounded by a plane indicated by diagonal lines and by a point immediately below the position of installation of the first front imaging unit 10 in the vehicle 100 is extracted by the first image production unit 32 and subjected to viewpoint transform. Similarly, the rear imaging area 62 shows that, of the range that can be imaged by the first rear imaging unit 12, the range bounded by a plane indicated by diagonal lines and by a point immediately below the position of installation of the first rear imaging unit 12 in the vehicle 100 is extracted by the first image production unit 32 and subjected to viewpoint transform. Similarly, the left imaging area 64 shows that, of the range that can be imaged by the first left imaging unit 14, the range bounded by a plane indicated by diagonal lines and by a point immediately below the position of installation of the first left imaging unit 14 in the vehicle 100 is extracted by the first image production unit 32 and subjected to viewpoint transform. Similarly, the right imaging area 66 shows that, of the range that can be imaged by the first right imaging unit 16, the range bounded by a plane indicated by diagonal lines and by a point immediately below the position of installation of the first right imaging unit 16 in the vehicle 100 is extracted by the first image production unit 32 and subjected to viewpoint transform. The images captured by these first imaging units show the neighborhood of the vehicle 100. Reference is made back to Fig. 2.

The first front imaging unit 10, the first rear imaging unit 12, the first left imaging unit 14, and the first right imaging unit 16 capture images as described above. The images are captured as moving images. Alternatively, the images may be still images continuously captured. The first front imaging unit 10, the first rear imaging unit 12, the first left imaging unit 14, and the first right imaging unit 16 output the captured images to the first acquisition unit 30. The first acquisition unit 30 acquires an image (hereinafter, referred to as "a first type image") from each of the first front imaging unit 10, the first rear imaging unit 12, the first left imaging unit 14, and the first right imaging unit 16. In essence, the first acquisition unit 30 acquires first type images that show the neighborhood of the vehicle 100. The first type image acquired by the first acquisition unit 30 is processed in the first image production unit 32.

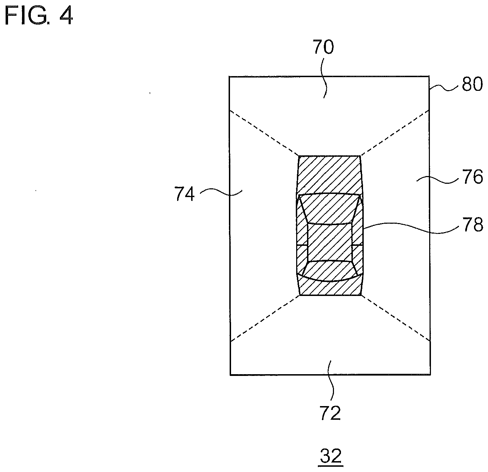

The first image production unit 32 processes the first type image acquired by the first acquisition unit 30. The first image production unit 32 subjects the first type image to viewpoint transform to produce a first type bird's-eye image as viewed from above the vehicle 100. For transform and production of a bird's-eye image, a publicly known technology may be used. For example, the pixels in the image may be projected onto a 3D curved surface in a virtual 3D space and a necessary region in the 3D curved surface is cut out in accordance with a virtual viewpoint above the vehicle 100. The cut-out region represents an image subjected to viewpoint transform. An example of the bird's-eye image thus produced is shown in Fig. 4.

Fig. 4 shows a first type bird's-eye image 80 produced in the first image production unit 32. A driver's vehicle icon 78 is provided at the center of the first type bird's-eye image 80 in Fig. 4. The driver's vehicle icon 78 is an image showing the top surface of the vehicle 100. A front image 70 is provided in front of the driver's vehicle icon 78, a rear image 72 is provided behind the driver's vehicle icon 78, a left image 74 is provided to the left of the driver's vehicle icon 78, and a right image 76 is provided to the right of the vehicle 100. Reference is made back to Fig. 2. In essence, the first image production unit 32 subjects the first type image acquired in the first acquisition unit 30 to viewpoint transform so as to produce the first type bird's-eye image 80 as viewed from above the vehicle 100. The first type bird's-eye image 80 produced by the first image production unit 32 is processed by the display controller 34.

The display controller 34 performs a process of displaying the first type bird's-eye image 80 produced by the first image production unit 32. The display controller 34 displays the first type bird's-eye image 80 on the display panel 52. The first type bird's-eye image 80 may be displayed on the display panel 52 at a desired point of time when the driver is required to check the neighborhood of the vehicle. For example, the first type bird's-eye image 80 may be displayed when the reverse gear of the vehicle 100 is selected to put the vehicle in a garage. The display panel 52 displays the first type bird's-eye image 80 as shown in Fig. 4.

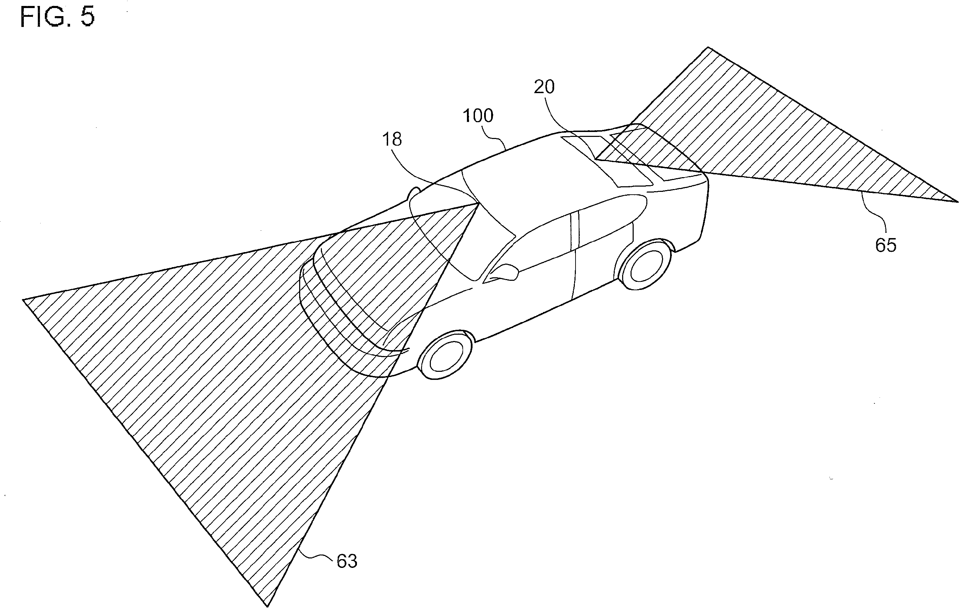

The second front imaging unit 18 and the second rear imaging unit 20 are provided as shown in Fig. 1. Fig. 5 is a perspective view showing the other imaging ranges formed around the vehicle 100. The second front imaging unit 18 forms a front imaging area 63 extending forward from the second front imaging unit 18 and captures an image in the front imaging area 63. The front imaging area 63 extends further ahead the vehicle 100 than the front imaging area 60. The second rear imaging unit 20 forms a rear imaging area 65 extending backward from the second rear imaging unit 20 and captures an image in the rear imaging area 65. The rear imaging area 65 extends further behind the vehicle 100 than the rear imaging area 62.

The front imaging area 63 indicated by diagonal lines in Fig. 5 shows that, of the range that can be imaged by the second front imaging unit 18, the range bounded by a plane indicated by diagonal lines and by a point immediately below the position of installation of the second front imaging unit 18 in the vehicle 100 is extracted by the second image production unit 38 and subjected to viewpoint transform. Similarly, the rear imaging area 65 shows that, of the range that can be imaged by the second rear imaging unit 20, the range bounded by a plane indicated by diagonal lines and by a point immediately below the position of installation of the second rear imaging unit 20 in the vehicle 100 is extracted by the second image production unit 38 and subjected to viewpoint transform. Comparison between the images captured by the second front imaging unit 18 and the second rear imaging unit 20 and the images captured by the first front imaging unit 10 and the first rear imaging unit 12 will be described later. The images captured by these second imaging units also show the neighborhood of the vehicle 100. Reference is made back to Fig. 2.

The second front imaging unit 18 images an area in front from a position higher than the first front imaging unit 10. Therefore, the image captured by the second front imaging unit 18 includes a place further away from the vehicle 100 than the places included in the image captured by the first front imaging unit 10. In essence, the second front imaging unit 18 is capable of capturing an image from a longer distance than the first front imaging unit 10. The imaging range of the second front imaging unit 18 may partially overlap the imaging range of the first front imaging unit 10 or may not overlap the imaging range of the first front imaging unit 10.

The second rear imaging unit 20 images an area behind from a position higher than the first rear imaging unit 12. Therefore, the image captured by the second rear imaging unit 20 includes a place further away from the vehicle 100 than the places included in the image captured by the first rear imaging unit 12. In essence, the second rear imaging unit 20 is capable of capturing an image from a longer distance than the first rear imaging unit 12. The imaging range of the second rear imaging unit 20 may partially overlap the imaging range of the first rear imaging unit 12 or may not overlap the imaging range of the first rear imaging unit 12. The images are captured as moving images. Alternatively, the images may be still images continuously captured. The second front imaging unit 18 and the second rear imaging unit 20 output the captured images to the second acquisition unit 36.

The second acquisition unit 36 acquires an image (hereinafter, referred to as "a second type image") from each of the second front imaging unit 18 and the second rear imaging unit 20. In essence, the second acquisition unit 36 acquires the second type images captured from positions higher than that of the first type images. The second type image acquired by the second acquisition unit 36 is processed in the second image production unit 38.

The second image production unit 38 processes the second type image acquired by the second acquisition unit 36. The second image production unit 38 subjects the second type image to viewpoint transform to produce a second type bird's-eye image as viewed from above the vehicle 100. The process in the second image production unit 38 is similar to the process in the first image production unit 32. In essence, the second image production unit 38 subjects the second type image acquired in the second acquisition unit 36 to viewpoint transform so as to produce the second type bird's-eye image 82 as viewed from above the vehicle. The second type bird's-eye image 82 shows a range more distanced from the vehicle 100 than the first type bird's-eye image 80. In the first type bird's-eye image 80, the images in the four directions including the front image 70 through the right image 76 are synthesized. The second type bird's-eye image 82 comprises the second type image in one direction. The second type bird's-eye image 82 produced by the second image production unit 38 is processed by the display controller 34.

The front sensor 22 and the rear sensor 24 are provided as shown in Fig. 1. For example, the front sensor 22 and the rear sensor 24 are millimeter-wave sensors or infra-red sensors. Alternatively, the front sensor 22 and the rear sensor 24 may be the second imaging units. When the second imaging units are used as the front sensor 22 and the rear sensor 24, the object detector 40 detects an edge in the images captured by the second imaging units so as to detect an obstacle. An identification number for identification is assigned to each of the front sensor 22 and the rear sensor 24.

The object detector 40 is connected to the front sensor 22 and the rear sensor 24 and detects an object around the vehicle 100. For detection of an object, a publicly known technology may be used and a description thereof is omitted. For example, when infra-red laser is used for the front sensor 22 or the rear sensor 24, infra-red laser is projected in a range in a direction of detection from the vehicle 100 and an object is detected based on a time difference identified when the infra-red laser reflected from the object is received. The detection range of the object detector 40 is configured to be farther than the imaging range of the first type image acquired in the first acquisition unit 30. The object detector 40 detects an object in either the front sensor 22 or the rear sensor 24. When the distance to the detected object is longer than a threshold value, the object detector 40 notifies the display controller 34 of the detection of the object. In this process, the identification number of the the front sensor 22 or the rear sensor 24 having detected the object is also communicated. The threshold value is set to a value toward the far end of the imaging range of the first type image.

The display controller 34 processes the first type bird's-eye image 80 produced by the first image production unit 32 for display. The display controller 34 also processes the second type bird's-eye image 82 produced by the second image production unit 38 for display. Further, when an object is detected in the object detector 40, the display controller 34 acquires the notification and the identification number from the object detector 40. When the notification from the object detector 40 is not acquired, the display controller 34 continues to display the first type bird's-eye image 80 on the display panel 52. Meanwhile, when the notification is acquired from the object detector 40, the display controller 34 displays the second type bird's-eye image 82 on the display panel 52 in addition to the first type bird's-eye image 80. The second type bird's-eye image 82 is displayed in addition to the first type bird's-eye image 80 on the display panel 52 when the notification from the object detector 40 is acquired after the first type bird's-eye image 80 is displayed.

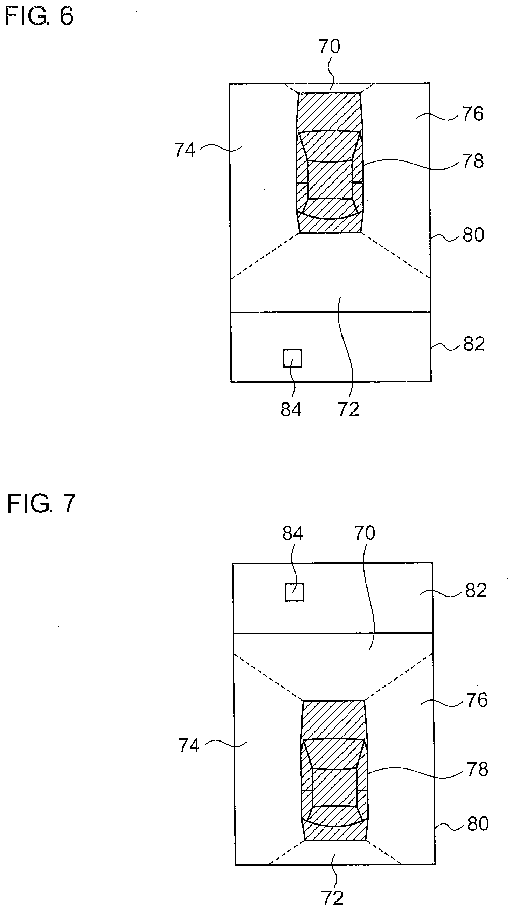

Fig. 6 shows a bird's-eye image produced in the display controller 34. The image is displayed when the notification from the object detector 40 is received and the identification number acquired indicates the rear sensor 24. When the identification number acquired indicates the rear sensor 24, an object located behind the vehicle 100 is detected by the rear sensor 24. As shown in the figure, the display controller 34 locates the second type bird's-eye image 82 showing an obstacle (object) 84 below the first type bird's-eye image 80, and, in particular, the rear image 72. Thus, the display controller 34 displays the second type bird's-eye image 82 corresponding to the direction of the detected object, in a direction from the first type bird's-eye image 80 in which the object detector 40 has detected the object. It is appropriate to show a view as shown in Fig. 6 based on the object detected by the rear sensor 24 when the vehicle 100 is moving backward.

Fig. 7 shows another bird's-eye image produced in the display controller 34. The image is displayed when the notification from the object detector 40 is received and the identification number acquired indicates the front sensor 22. When the identification number acquired indicates the front sensor 22, an object located in front of the vehicle 100 is detected by the front sensor 22. As shown in the figure, the display controller 34 locates the second type bird's-eye image 82 showing an obstacle 84 above the first type bird's-eye image 80, and, in particular, the front image 70. The display controller 34 displays the second type bird's-eye image 82 corresponding to the direction of the detected object, in a direction from the first type bird's-eye image 80 in which the object detector 40 has detected the object. It is appropriate to show a view as shown in Fig. 7 based on the object detected by the front sensor 22 when the vehicle 100 is moving forward.

The process in the display controller 34 for producing these bird's-eye image will be described in further detail. When the identification number acquired indicates the rear sensor 24, the display controller 34 selects the second type bird's-eye image 82 produced from the second type image captured by the second rear imaging unit 20. The display controller 34 locates the selected second type bird's-eye image 82 below the rear image 72 corresponding to the first rear imaging unit 12 facing backward like the second rear imaging unit 20. In this process, the display controller 34 may display the second type bird's-eye image 82 with a larger angle of view than that of the first type bird's-eye image 80 in the direction in which the object detector 40 has detected the object. Alternatively, the display controller 34 may display the second type bird's-eye image 82 on an enlarged scale relative to the angle of view of the first type bird's-eye image 80 in the direction in which the object detector 40 has detected the object. A publicly known technology may be used to display the image with a larger angle of view or to display the mage on an enlarged scale, and a description thereof is omitted. Further, as shown in Fig. 6, the display controller 34 may move the first type bird's-eye image 80 toward the top and display the second type bird's-eye image 82 below the first type bird's-eye image 80.

Meanwhile, when the identification number acquired indicates the front sensor 22, the display controller 34 selects the second type bird's-eye image 82 produced from the second type image captured by the second front imaging unit 18. The display controller 34 locates the selected second type bird's-eye image 82 above the front image 70 corresponding to the first front imaging unit 10 facing forward like the second front imaging unit 18. In this case, too, the display controller 34 may display the second type bird's-eye image 82 with a larger angle of view than that of the first type bird's-eye image 80 in the direction in which the object detector 40 has detected the object. Alternatively, the display controller 34 may display the second type bird's-eye image 82 on an enlarged scale relative to the angle of view of the first type bird's-eye image 80 in the direction in which the object detector 40 has detected the object. Further, as shown in Fig. 7, the display controller 34 may move the first type bird's-eye image 80 toward the top and display the second type bird's-eye image 82 below the first type bird's-eye image 80.

By displaying images as shown in Figs. 6 and 7, the second type bird's-eye image 82 is displayed in the direction in which the obstacle 84 is detected such that the display range of the bird's-eye image is substantively enlarged, when the obstacle 84 is located farther than the range shown in the first type bird's-eye image 80. Therefore, the driver can know the presence and the relative position of the obstacle more properly by checking the bird's-eye image displayed as well as by visual inspection.

The second imaging unit from which the second acquisition unit 36 acquires the second type image is provided at a higher position than the first imaging unit from which the first acquisition unit 30 acquires the first type image. The second imaging unit, when provided near the roof of the vehicle 100 as shown in Fig. 1, is positioned higher than the driver and so views the obstacle 84 from higher above the obstacle 84 than the driver. Therefore, the driver can know the presence of the obstacle 84 in the 3D space move properly.

The features are implemented in hardware such as a CPU, a memory, or other LSI's of an arbitrary computer, and in software such as a program loaded into a memory, etc. The figure depicts functional blocks implemented by the cooperation of these elements. Therefore, it will be obvious to those skilled in the art that the functional blocks may be implemented in a variety of manners by hardware only or by a combination of hardware and software.

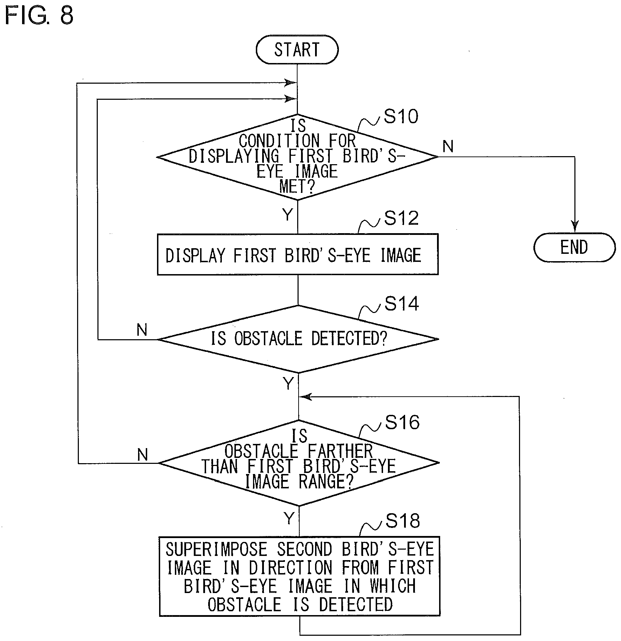

A description will now be given of the operation of the vehicle display device 50 configured as described above. Fig. 8 is a flowchart showing steps for display performed by the vehicle display device 50. When the condition for displaying the first type bird's-eye image 80 is met (Y in S10), the display controller 34 displays the first type bird's-eye image 80 on the display panel 52 (S12). If the front sensor 22 or the rear sensor 24 does not detect the obstacle 84 (N in S14), control is returned to step 10. When the front sensor 22 or the rear sensor 24 detects the obstacle 84 (Y in S14), control is returned to step 10 if the obstacle 84 is not located farther than the range of the first type bird's-eye image 80 (N in S16). If the obstacle 84 is located farther than the range of the first type bird's-eye image 80 (Y in S16), the display controller 34 superimposes the second type bird's-eye image 82 in a direction from the first type bird's-eye image 80 in which the obstacle 84 is detected (S18), whereupon control is returned to step 16. When the condition for displaying the first type bird's-eye image 80 is not met (N in S10), the process is terminated.

According to the embodiment, only the first type bird's-eye image is displayed when an object is not detected so that the drive can know the situation in the neighborhood of the vehicle easily. When the presence of an object is detected, the second type bird's-eye image captured from a position higher than that of the first type bird's-eye image is displayed so that the driver can know the presence of a remote object easily. Since the second type bird's-eye image corresponding to the direction of the detected object is displayed, reduction in the size of the first type bird's-eye image is inhibited. Since it is possible to detect an object farther than the imaging range of the first type image, objects that care not included in the first type bird's-eye image can be detected.

Since the second type bird's-eye image is displayed in the direction from the first type bird's-eye image in which the object is detected, the relative positions of the first type bird's-eye image and the second type bird's-eye image can be made known easily. Further, by displaying the second type bird's-eye image with an angle of view larger than the angle of view of the first type bird's-eye image, the position at which the object is located can be made known easily. Further, by displaying the second type bird's-eye image on an enlarged scale relative to the angle of view of the first type bird's-eye image, the presence of the object can be made known easily.

Generally, the virtual viewpoint is defined above the neighborhood of the center of the vehicle 100, but the position of the virtual viewpoint may differ between the first type bird's-eye image 80 and the second type bird's-eye image 82. For example, the virtual viewpoint of the first type bird's-eye image 80 may be defined above the neighborhood of the center of the vehicle 100, and the virtual viewpoint of the second type bird's-eye image 82 may be defined more toward the front end of the vehicle 100 than that of the first type bird's-eye image 80. The second type bird's-eye image 82 shows a more extensive range in front of the vehicle 100 than the first type bird's-eye image 80. Therefore, by defining the virtual viewpoint of the second type bird's-eye image 82 more toward the front end of the vehicle 100, the feeling of strangeness experienced in the display mode as shown in Fig. 7 as occurring between the first type bird's-eye image 80 and the second type bird's-eye image 82 is reduced.

### (Embodiment 2)

A description will now be given of Embodiment 2. Like Embodiment 1, Embodiment 2 relates to a vehicle display device that produces a bird's-eye image by subjecting images captured by a plurality of imaging units provided in a vehicle to viewpoint transform and displays the bird's-eye image thus produced. The vehicle display device according to Embodiment 1 displays the second type bird's-eye image in addition to the first type bird's-eye image when the presence of an object not included in the first type bird's-eye image is detected. Meanwhile, the vehicle display device according to Embodiment 2 starts displaying the second type bird's-eye image in addition to the first type bird's-eye image when the presence of an object not included in the first type bird's-eye image and included in the second type bird's-eye image is detected. The vehicle 100 and the vehicle display device 50 according to Embodiment 2 are of the same type as those of Figs. 1 and 2. The description here concerns a difference from Embodiment 1.

As already described above, the object detector 40 is connected to the front sensor 22 and the rear sensor 24 and detects an object around the vehicle 100. The object detector 40 detects an object in either the front sensor 22 or the rear sensor 24. When the distance to the detected object is farther than the imaging range of the first type bird's-eye image and is included in the imaging range of the second type bird's-eye image, the the object detector 40 notifies the display controller 34 of the detection of the object.

When an object is detected in the object detector 40, the display controller 34 acquires the notification and the identification number from the object detector 40. When the notification from the object detector 40 is acquired, the display controller 34 displays the second type bird's-eye image 82 in addition to the first type bird's-eye image 80 on the display panel 52. The second type bird's-eye image 82 is displayed in addition to the first type bird's-eye image 80 on the display panel 52 when the notification from the object detector 40 is acquired after the first type bird's-eye image 80 is displayed. In essence, the display controller 34 starts displaying the second type bird's-eye image 82 corresponding to the direction of the detected object in addition to the first type bird's-eye image 80 when the object detected by the object detector 40 is outside the range of the first type bird's-eye image 80 and inside the range of the second type bird's-eye image 82.

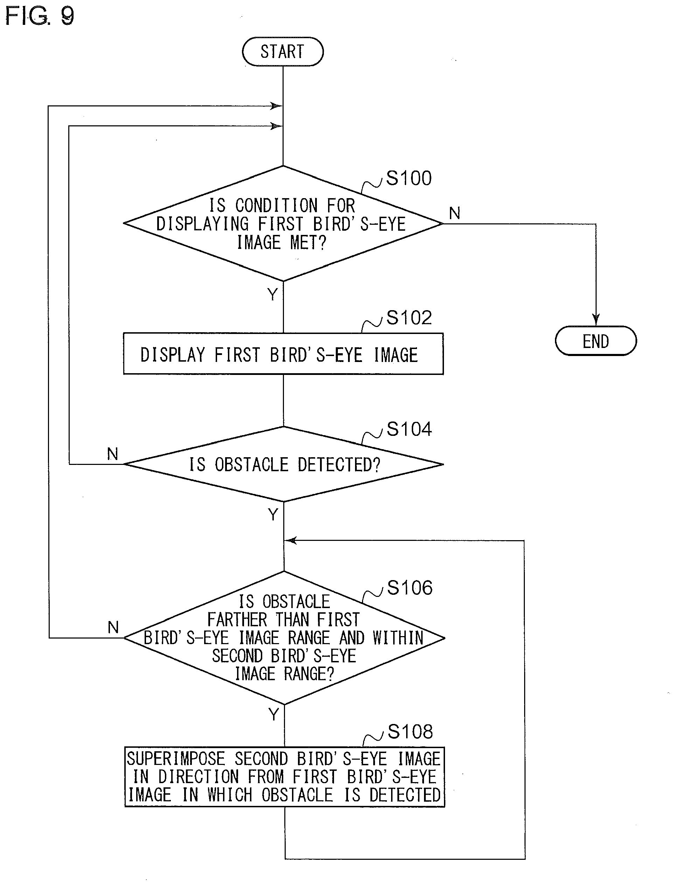

A description will now be given of the operation of the vehicle display device 50 configured as described above. Fig. 9 is a flowchart showing steps for display performed by the vehicle display device 50 according to Embodiment 2 of the present invention. When the condition for displaying the first type bird's-eye image 80 is met (Y in S100), the display controller 34 displays the first type bird's-eye image 80 on the display panel 52 (S102). If the front sensor 22 or the rear sensor 24 does not detect the obstacle 84 (N in S104), control is returned to step 100. When the front sensor 22 or the rear sensor 24 detects the obstacle 84 (Y in S104), control is returned to step 100, if the obstacle 84 is not located farther than the range of the first type bird's-eye image 80 or is not included in the range of the second type bird's-eye image 82 (N in S106). If the obstacle 84 is located farther than the range of the first type bird's-eye image 80 and is included in the range of the second type bird's-eye image 82 (Y in S106), the display controller 34 superimposes the second type bird's-eye image 82 in direction from the first type bird's-eye image 80 in which the obstacle 84 is detected (S108) and returns to step 106. When the condition for displaying the first type bird's-eye image 80 is not met (N in S100), the process is terminated.

According to this embodiment, the second type bird's-eye image corresponding to the direction of the detected object is displayed in addition to the first type bird's-eye image when the object is outside the range of the first type bird's-eye image and inside the range of the second type bird's-eye image. Therefore, an object not included in the first type bird's-eye image and included in the second type bird's-eye image is ensured to be displayed. Since the second type bird's-eye image is displayed in the direction from the first type bird's-eye image in which the object is detected, the relative positions of the first type bird's-eye image and the second type bird's-eye image can be made known easily.

### (Embodiment 3)

A description will now be given of Embodiment 3. Like the foregoing embodiments, Embodiment 3 relates to a vehicle display device that produces a bird's-eye image by subjecting images captured by a plurality of imaging units provided in a vehicle to viewpoint transform and displays the bird's-eye image thus produced. In the foregoing embodiments, the second type bird's-eye image is not displayed when an object is included in the first type bird's-eye image. Meanwhile, in Embodiment 3, the second type bird's-eye image is displayed in addition to the first type bird's-eye image even when an object is included in the first type bird's-eye image. In this process, the images are displayed in such a manner that it is possible to determine that the object included in the first type bird's-eye image and the object included in the second type bird's-eye image are identical. The vehicle 100 according to Embodiment 3 is of the same type as that of Fig. 1. The following description concerns a difference from the description above.

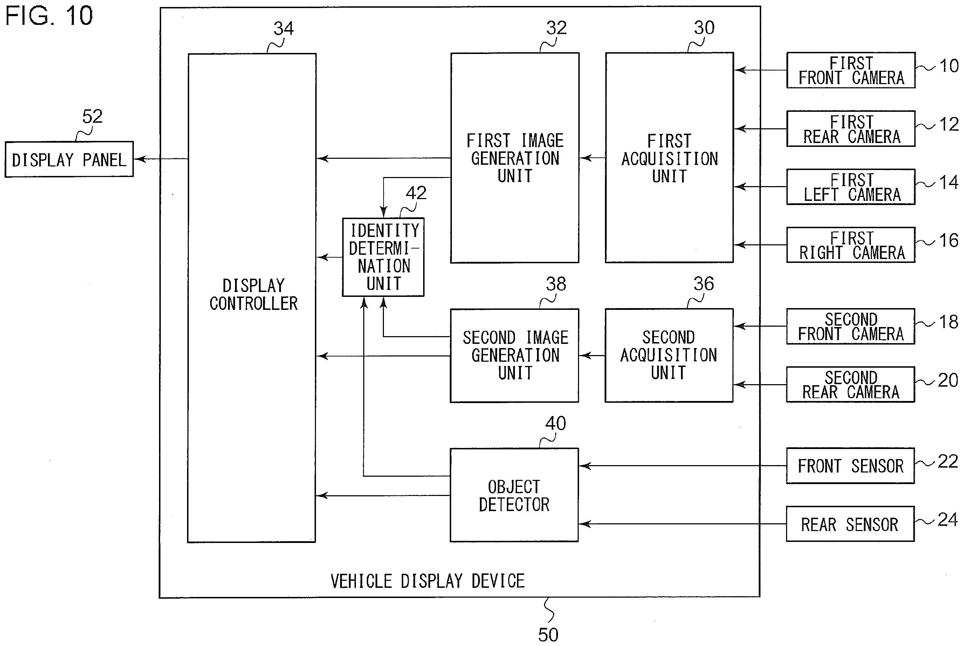

Fig. 10 shows a configuration of a vehicle display device 50 according to Embodiment 3 of the present invention. The vehicle display device 50 further includes an identity determination unit 42 in addition to the components of the vehicle display device 50 shown in Fig. 2. As already described above, the object detector 40 is connected to the front sensor 22 and the rear sensor 24 and detects an object around the vehicle 100. When the object detector 40 detects an object in either the front sensor 22 or the rear sensor 24, the object detector 40 notifies the display controller 34 and the identity determination unit 42 of the detection of the object.

The identity determination unit 42 is notified by the object detector 40 of the detection of an object. In this process, the position of the detected object is also communicated. The identity determination unit 42 receives the first type bird's-eye image 80 from the first image production unit 32 and receives the second type bird's-eye image 82 from the second image production unit 38. Further, the identity determination unit 42 acquires the positional information and the direction of travel of the vehicle 100. For acquisition of the positional information and direction of travel of the vehicle 100, a publicly known technology may be used and a description thereof is omitted. The identity determination unit 42 has an advance knowledge of the angle of view of the first type bird's-eye image 80 and so acquires the coordinates for a plurality of pixels included in the first type bird's-eye image 80 based on the positional information and direction of travel of the vehicle 100 and the angle of view of the first type bird's-eye image 80. Further, the identity determination unit 42 acquires the coordinates for a plurality of pixels included in the second type bird's-eye image 82 by processing the second type bird's-eye image 82 similarly.

When the position (coordinates) at which the object detector 40 has detected the object is included in the first type bird's-eye image 80 and the second type bird's-eye image 82, the identity determination unit 42 determines that the same object is included. The identity determination unit 42 may perform an image recognition process in the first type bird's-eye image 80 and the second type bird's-eye image 82 and compare the shapes of the objects acquired in the image recognition process to determine that the same object is included. Thus, the identity determination unit 42 makes a determination as to the identity of the object detected by the object detector 40 in the first type bird's-eye image 80 and the second type bird's-eye image 82. The identity determination unit 42 outputs a result of determination as to whether the same object is included to the display controller 34.

When the object detector 40 detects an object, the display controller 34 displays the second type bird's-eye image 82 in addition to the first type bird's-eye image 80. When displaying the second type bird's-eye image 82 in addition to the first type bird's-eye image 80, the display controller 34 displays the images in such a manner that it is possible to determine that the objects shown in the first type bird's-eye image 80 and in the second type bird's-eye image 82 are identical, based on the result of determination by the identity determination unit 42. When the detected object is shown only in the second type bird's-eye image 82, the images need not be displayed in such a manner that it is possible to determine that the objects are identical. When the object is shown both in the second type bird's-eye image 82 and the first type bird's-eye image 80 as the vehicle 100 approaches the detected object, the images are displayed in such a manner that it is possible to determine that the objects are identical.

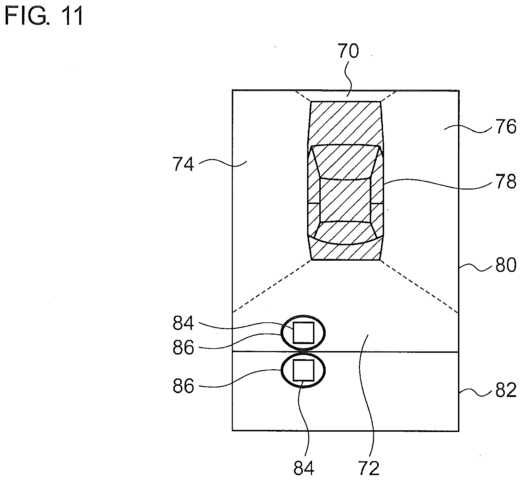

Fig. 11 shows a bird's-eye image produced in the display controller 34. As in the case of Fig. 6, the image is displayed when the notification from the object detector 40 is received and the identification number acquired indicates the rear sensor 24. As shown in the figure, the display controller 34 locates the second type bird's-eye image 82 showing the obstacle (object) 84 below the first type bird's-eye image 80, and, in particular, the rear image 72. The obstacle 84 is also shown in the first type bird's-eye image 80. The obstacle 84 included in the first type bird's eye image 80 and the obstacle 84 included in the second type bird's-eye image 82 are determined by the identity determination unit 42 as being identical. Therefore, an identity marker 86 is shown to mark the obstacle 84 included in the first type bird's-eye image 80 and the obstacle included in the second type bird's-eye image 82. The identity marker 86 is displayed to enable a determination that the objects are identical and are shown to encircle the objects with the same shape or same color.

According to this embodiment, when displaying the second type bird's-eye image 82 in addition to the first type bird's-eye image 80, the images are displayed in such a manner that it is possible to determine that the objects shown in the first type bird's-eye image and in the second type bird's-eye image are identical. It is therefore easy to recognize the identical object shown in the first type bird's-eye image and the second type bird's-eye image. Since it is easy to recognize the identical object shown in the first type bird's-eye image and the second type bird's-eye image, the position of the object can be easily recognized as the vehicle approaches the object.

Given above is an explanation based on exemplary embodiments. The embodiment is intended to be illustrative only and it will be understood by those skilled in the art that various modifications to constituting elements and processes could be developed and that such modifications are also within the scope of the present invention.

### [DESCRIPTION OF THE REFERENCE NUMERALS]

10 first front imaging unit, 12 first rear imaging unit, 14 first left imaging unit, 16 first right imaging unit, 18 second front imaging unit, 20 second rear imaging unit, 22 front sensor, 24 rear sensor, 30 first acquisition unit, 32 first image production unit, 34 display controller, 36 second acquisition unit, 38 second image production unit, 40 object detector, 50 vehicle display device, 52 display panel, 100 vehicle

### [INDUSTRIAL APPLICABILITY]

The present invention allows a driver to easily know the situation in the neighborhood of the vehicle and, in particular, the presence of an object that could be an obstacle.

## Claims

1. A vehicle display device (50) comprising;
a first acquisition unit (30) configured to acquire a first type image that shows a neighborhood of a vehicle (100);
a first image production unit (32) configured to subject the first type image acquired in the first acquisition unit (30) to viewpoint transform so as to produce a first type bird's-eye image as viewed from above the vehicle (100);
a display controller (34) configured to display the first type bird's-eye image produced in the first image production unit (32);
a second acquisition unit (36) configured to acquire a second type image that shows a range more distanced from the vehicle (100) than the first type image from a position higher than that of the first type image acquired in the first acquisition unit (30);
a second image production unit (38) configured to subject the second type image acquired in the second acquisition unit (36) to viewpoint transform so as to produce a second type bird's-eye image as viewed from above the vehicle (100); and
an object detector (40) configured to detect an object around the vehicle (100), wherein
the display controller (34) displays the second type bird's-eye image produced in the second image production unit (38) and corresponding to a direction of the object detected, in addition to the first type bird's-eye image when the object detector (40) has detected the object, **characterized by**
an identity determination unit (42) configured to make a determination as to the identity of the object detected by the object detector (40) in the first type bird's-eye image and the second type bird's-eye image, wherein
when displaying the second type bird's-eye image in addition to the first type bird's-eye image, the display controller (34) is configured to display the first type bird's-eye image and the second type bird's-eye image in such a manner that it is possible to determine whether the objects shown in the first type bird's-eye image and in the second type bird's-eye image are identical, based on a result of determination by the identity determination unit (42).

2. The vehicle display device (50) according to claim 1, wherein
the object detector (40) has a range of detection farther than an imaging range of the first type image acquired in the first acquisition unit (30).

3. The vehicle display device (50) according to claim 1 or 2, wherein
the display controller (34) is configured to display the second type bird's-eye image produced in the second image production unit (38) in a direction from the first type bird's-eye image produced in the first image production unit (32) in which the object detector (40) has detected the object.

4. The vehicle display device (50) according to any one of claims 1 through 3, wherein
the display controller (34) is configured to display the second type bird's-eye image with a larger angle of view than that of the first type bird's-eye image in the direction in which the object detector (40) has detected the object.

5. The vehicle display device (50) according to any one of claims 1 through 3, wherein
the display controller (34) is configured to display the second type bird's-eye image on an enlarged scale relative to the angle of view of the first type bird's-eye image in the direction in which the object detector (40) has detected the object.

6. The vehicle display device (50) according to any one of claims 1 through 5, wherein
the second image production unit (38) is configured to produce the second type bird's-eye image that shows a range more distanced from the vehicle (100) than the first type bird's-eye image produced by the first image production unit (32), and
the display controller (34) is configured to start displaying the second type bird's-eye image corresponding to the direction of the object detected in addition to the-first type bird's-eye image when the object detected by the object detector (40) is outside a range of the first type bird's-eye image and within a range of the second type bird's-eye image.

7. A vehicle display method comprising;
acquiring a first type image that shows a neighborhood of a vehicle (100);
subjecting the first type image acquired to viewpoint transform so as to produce a first type bird's-eye image as viewed from above the vehicle (100);
displaying the first type bird's-eye image produced; acquiring a second type image that shows a range more distanced from the vehicle (100) than the first type image from a position higher than that of the first type image;
subjecting the second type image acquired to viewpoint transform so as to produce a second type bird's-eye image as viewed from above the vehicle (100);
detecting an object around the vehicle (100); and
displaying the second type bird's-eye image produced and corresponding to a direction of the object detected, in addition to the first type bird's-eye image when the object is detected, **characterized by**
making a determination as to the identity of the object detected in the first type bird's-eye image and the second type bird's-eye image, wherein
when displaying the second type bird's-eye image in addition to the first type bird's-eye image, the first type bird's-eye image and the second type bird's-eyeimage are displayed in such a manner that it is possible to determine whether the objects shown in the first type bird's-eye image and in the second type bird's-eye image are identical, based on a result of determination.

## Patentansprüche

1. Fahrzeuganzeigevorrichtung (50), die folgendes aufweist:
eine erste Erfassungseinheit (30), die konfiguriert ist, um ein Bild eines ersten Typs zu erfassen bzw. aufzunehmen, das eine Nachbarschaft bzw. Umgebung eines Fahrzeugs (100) anzeigt;
eine erste Bilderzeugungseinheit (32), die konfiguriert ist, um das in der ersten Erfassungseinheit (30) aufgenommene Bild des ersten Typs einer Blickwinkeltransformation zu unterziehen, um so ein Vogelperspektivenbild eines ersten Typs von oben gesehen auf das Fahrzeug (100) zu erzeugen;
eine Anzeigesteuerung (34), die konfiguriert ist, um das Vogelperspektivenbild des ersten Typs, das in der ersten Bilderzeugungseinheit (32) erzeugt wird, anzuzeigen;
eine zweite Erfassungseinheit (36), die konfiguriert ist, um ein Bild eines zweiten Typs aufzunehmen, das einen Bereich zeigt, der weiter vom Fahrzeug (100) entfernt ist als das Bild des ersten Typs, und zwar von einer Position, die höher ist als die des Bildes des ersten Typs, das in der ersten Erfassungseinheit (30) aufgenommen wurde;
eine zweite Bilderzeugungseinheit (38), die konfiguriert ist, um das in der zweiten Erfassungseinheit (36) aufgenommene Bild des zweiten Typs einer Blickwinkeltransformation zu unterziehen, um so ein Vogelperspektivenbild des zweiten Typs von oben gesehen auf das Fahrzeug (100) zu erzeugen; und
einen Objektdetektor (40), der konfiguriert ist, um ein Objekt um das Fahrzeug (100) herum zu detektieren, wobei
die Anzeigesteuerung (34) das in der zweiten Bilderzeugungseinheit (38) erzeugte Vogelperspektivenbild des zweiten Typs anzeigt, und zwar in einer Richtung des detektierten Objekts, zusätzlich zum Vogelperspektivenbild des ersten Typs, wenn der Objektdetektor (40) das Objekt detektiert hat, **gekennzeichnet durch**
eine Identitätsbestimmungseinheit (42), die konfiguriert ist, um eine Bestimmung der Identität des durch den Objektdetektor (40) detektierten Objekts im Vogelperspektivenbild des ersten Typs und im Vogelperspektivenbild des zweiten Typs vorzunehmen, wobei
wenn das Vogelperspektivenbild des zweiten Typs zusätzlich zum Vogelperspektivenbild des ersten Typs angezeigt wird, die Anzeigesteuerung (34) konfiguriert ist, um das Vogelperspektivenbild des ersten Typs und das Vogelperspektivenbild des zweiten Typs so anzuzeigen, dass bestimmt werden kann, ob die im Vogelperspektivenbild des ersten Typs und im Vogelperspektivenbild des zweiten Typs dargestellte Objekte identisch sind, basierend auf einem Ergebnis der Bestimmung durch die Identitätsbestimmungseinheit (42).

2. Fahrzeuganzeigevorrichtung (50) nach Anspruch 1, wobei
der Objektdetektor (40) einen Detektionsbereich aufweist, der weiter als ein Abbildungsbereich des in der ersten Erfassungseinheit (30) aufgenommenen Bildes des ersten Typs ist.

3. Fahrzeuganzeigevorrichtung (50) nach Anspruch 1 oder 2, wobei
die Anzeigesteuerung (34) konfiguriert ist, um das in der zweiten Bilderzeugungseinheit (38) erzeugte Vogelperspektivenbild des zweiten Typs in einer Richtung von dem in der ersten Bilderzeugungseinheit (32) erzeugten Vogelperspektivenbild des ersten Typs anzuzeigen, in der der Objektsensor (40) das Objekt detektiert hat.

4. Fahrzeuganzeigevorrichtung (50) nach einem der Ansprüche 1 bis 3, wobei
die Anzeigesteuerung (34) konfiguriert ist, um das Vogelperspektivenbild des zweiten Typs mit einem größeren Blickwinkel als der des Vogelperspektivenbildes des ersten Typs in der Richtung anzuzeigen, in der der Objektdetektor (40) das Objekt detektiert hat.

5. Fahrzeuganzeigevorrichtung (50) nach einem der Ansprüche 1 bis 3, wobei
die Anzeigesteuerung (34) konfiguriert ist, um das Vogelperspektivenbild des zweiten Typs auf einer vergrößerten Skala relativ zum Blickwinkel des Vogelperspektivenbildes des ersten Typs in der Richtung anzuzeigen, in der der Objektdetektor (40) das Objekt detektiert hat.

6. Fahrzeuganzeigevorrichtung (50) nach einem der Ansprüche 1 bis 5, wobei
die zweite Bilderzeugungseinheit (38) konfiguriert ist, um das Vogelperspektivenbild des zweiten Typs zu erzeugen, das einen vom Fahrzeug (100) weiter entfernten Bereich aufweist als das von der ersten Bilderzeugungseinheit (32) erzeugte Vogelperspektivenbild des ersten Typs, und
die Anzeigesteuerung (34) konfiguriert ist, um mit der Anzeige des Vogelperspektivenbildes des zweiten Typs entsprechend der Richtung des detektierten Objekts anzuzeigen, und zwar zusätzlich zum Vogelperspektivenbild des ersten Typs, wenn das vom Objektdetektor (40) detektierte Objekt außerhalb eines Bereichs des Vogelperspektivenbildes des ersten Typs und innerhalb eines Bereichs des Vogelperspektivenbildes des zweiten Typs liegt.

7. Fahrzeuganzeigeverfahren, das folgendes aufweist:
Erfassen eines Bildes eines ersten Typs, das eine Nachbarschaft eines Fahrzeugs (100) zeigt;
Unterziehen des aufgenommenen Bildes des ersten Typs einer Blickwinkeltransformation, um ein Vogelperspektivenbild eines ersten Typs von oben gesehen auf das Fahrzeug (100) zu erzeugen;
Anzeigen des erzeugten Vogelperspektivenbildes des ersten Typs;
Erfassen eines Bildes eines zweiten Typs, das einen Bereich zeigt, der weiter vom Fahrzeug (100) entfernt ist als das Bild des ersten Typs von einer Position, die höher ist als die des Bildes des ersten Typs;
Unterziehen des aufgenommenen Bildes des zweiten Typs einer Blickwinkeltransformation, um ein Vogelperspektivenbild eines zweiten Typs von oben gesehen auf das Fahrzeug (100) zu erzeugen;
Detektieren eines Objekts um das Fahrzeug (100) herum; und
Anzeigen des erzeugten Vogelperspektivenbildes des zweiten Typs, und zwar entsprechend einer Richtung des detektierten Objekts, zusätzlich zum Vogelperspektivenbild des ersten Typs, wenn das Objekt detektiert wird, **gekennzeichnet durch**
Vornehmen einer Bestimmung der Identität des Objekts, das im Vogelperspektivenbild des ersten Typs und im Vogelperspektivenbild des zweiten Typs detektiert wurde, wobei
bei der Darstellung des Vogelperspektivenbildes des zweiten Typs zusätzlich zum Vogelperspektivenbild des ersten Typs das Vogelperspektivenbild des ersten Typs und das Vogelperspektivenbild des zweiten Typs so dargestellt werden, dass aufgrund des Ergebnisses der Bestimmung bestimmt werden kann, ob die im Vogelperspektivenbild des ersten Typs und im Vogelperspektivenbild des zweiten Typs dargestellten Objekte identisch sind.

## Revendications

1. Dispositif d'affichage pour véhicule (50) comprenant :
une première unité d'acquisition (30) configurée pour acquérir une image d'un premier type qui montre un voisinage d'un véhicule (100) ;
une première unité de production d'image (32) configurée pour soumettre l'image du premier type acquise dans la première unité d'acquisition (30) à une transformation de point de vue de sorte à produire une image à vol d'oiseau du premier type telle que vue d'au-dessus du véhicule (100) ;
un contrôleur d'affichage (34) configuré pour afficher l'image à vol d'oiseau du premier type produite dans la première unité de production d'image (32) ;
une deuxième unité d'acquisition (36) configurée pour acquérir une image d'un deuxième type qui montre une portée plus éloignée du véhicule (100) que l'image du premier type à partir d'une position plus haute que celle de l'image du premier type acquise dans la première unité d'acquisition (30) ;
une deuxième unité de production d'image (38) configurée pour soumettre l'image du deuxième type acquise dans la deuxième unité d'acquisition (36) à une transformation de point de vue de sorte à produire une image à vol d'oiseau du deuxième type telle que vue d'au-dessus du véhicule (100) ; et
un détecteur d'objet (40) configuré pour détecter un objet autour du véhicule (100), dans lequel
le contrôleur d'affichage (34) affiche l'image à vol d'oiseau du deuxième type produite dans la deuxième unité de production d'image (38) et correspondant à une direction de l'objet détecté, en plus de l'image à vol d'oiseau du premier type quand le détecteur d'objet (40) a détecté l'objet, **caractérisé par**
une unité de détermination d'identité (42) configurée pour effectuer une détermination concernant l'identité de l'objet détecté par le détecteur d'objet (40) dans l'image à vol d'oiseau du premier type et dans l'image à vol d'oiseau du deuxième type, dans lequel
pendant l'affichage de l'image à vol d'oiseau du deuxième type en plus de l'image à vol d'oiseau du premier type, le contrôleur d'affichage (34) est configuré pour afficher l'image à vol d'oiseau du premier type et l'image à vol d'oiseau du deuxième type de telle sorte qu'il soit possible de déterminer si les objets montrés dans l'image à vol d'oiseau du premier type et dans l'image à vol d'oiseau du deuxième type sont identiques, sur la base d'un résultat de la détermination par l'unité de détermination d'identité (42).

2. Dispositif d'affichage pour véhicule (50) selon la revendication 1, dans lequel
le détecteur d'objet (40) a une portée de détection plus étendue qu'une portée d'imagerie de l'image du premier type acquise dans la première unité d'acquisition (30).

3. Dispositif d'affichage pour véhicule (50) selon la revendication 1 ou 2, dans lequel
le contrôleur d'affichage (34) est configuré pour afficher l'image à vol d'oiseau du deuxième type produite dans la deuxième unité de production d'image (38) dans une direction par rapport à l'image à vol d'oiseau du premier type produite dans la première unité de production d'image (32) dans laquelle le détecteur d'objet (40) a détecté l'objet.

4. Dispositif d'affichage pour véhicule (50) selon l'une quelconque des revendications 1 à 3, dans lequel
le contrôleur d'affichage (34) est configuré pour afficher l'image à vol d'oiseau du deuxième type avec un angle de vue plus grand que celui de l'image à vol d'oiseau du premier type dans la direction dans laquelle le détecteur d'objet (40) a détecté l'objet.

5. Dispositif d'affichage pour véhicule (50) selon l'une quelconque des revendications 1 à 3, dans lequel
le contrôleur d'affichage (34) est configuré pour afficher l'image à vol d'oiseau du deuxième type à une échelle agrandie par rapport à l'angle de vue de l'image à vol d'oiseau du premier type dans la direction dans laquelle le détecteur d'objet (40) a détecté l'objet.

6. Dispositif d'affichage pour véhicule (50) selon l'une quelconque des revendications 1 à 5, dans lequel
la deuxième unité de production d'image (38) est configurée pour produire l'image à vol d'oiseau du deuxième type qui montre une portée plus éloignée du véhicule (100) que l'image à vol d'oiseau du premier type produite par la première l'unité de production d'image (32) et
le contrôleur d'affichage (34) est configuré pour commencer à afficher l'image à vol d'oiseau du deuxième type correspondant à la direction de l'objet détecté en plus de l'image à vol d'oiseau du premier type quand l'objet détecté par le détecteur d'objet (40) est en dehors d'une portée de l'image à vol d'oiseau du premier type et dans la portée de l'image à vol d'oiseau du deuxième type.

7. Procédé d'affichage pour véhicule comprenant les étapes suivantes :
l'acquisition d'une image d'un premier type qui montre le voisinage d'un véhicule (100) ;
la soumission de l'image du premier type acquise à une transformation de point de vue de sorte à produire une image à vol d'oiseau du premier type telle que vue d'au-dessus du véhicule (100) ;
l'affichage de l'image à vol d'oiseau du premier type produite ;
l'acquisition d'une image d'un deuxième type qui montre une portée plus éloignée du véhicule (100) que l'image du premier type à partir d'une position plus haute que celle de l'image du premier type ;
la soumission de l'image du deuxième type acquise à une transformation de point de vue de sorte à produire une image à vol d'oiseau du deuxième type telle que vue d'au-dessus du véhicule (100) ;
la détection d'un objet autour du véhicule (100) ; et
l'affichage de l'image à vol d'oiseau du deuxième type produite et correspondant à une direction de l'objet détecté, en plus de l'image à vol d'oiseau du premier type quand l'objet est détecté, **caractérisé par**
la mise en œuvre d'une détermination concernant l'identité de l'objet détecté dans l'image à vol d'oiseau du premier type et dans l'image à vol d'oiseau du deuxième type, dans lequel
pendant l'affichage de l'image à vol d'oiseau du deuxième type en plus de l'image à vol d'oiseau du premier type, l'image à vol d'oiseau du premier type et l'image à vol d'oiseau du deuxième type sont affichées de telle sorte qu'il soit possible de déterminer si les objets montrés dans l'image à vol d'oiseau du premier type et dans l'image à vol d'oiseau du deuxième type sont identiques, sur la base d'un résultat de la détermination.
